# FASCICULE DE BREVET EUROPEEN

(11) **EP 3 464 914 B1**
(45) Date de publication et mention de la délivrance du brevet: **07.06.2023**
(21) Numéro de dépôt: 17742464.5
(22) Date de dépôt: 06.06.2017
(51) Int. Cl.: F16B 43/00, F16G 3/08

(54) **RONDELLE D'APPUI**
UNTERSTÜTZENDE UNTERLEGSCHEIBE
SUPPORTING WASHER

(30) Priorité: 07.06.2016 FR 1600917
(43) Date de publication de la demande: 10.04.2019
(73) Titulaire: MLT Minet Lacing Technology, 42400 Saint-Chamond (FR)
(72) Inventeur: JAKOB, Horst, 30360 Deaux (FR); TAVERNIER, Bernard, 42500 Le Chambon Feugerolles (FR)
(74) Mandataire: Alatis
(86) Numéro de dépôt international: PCT/FR2017/051419
(87) Numéro de publication internationale: WO 2017/212161

(56) Documents cités:
- FR-A- 1 108 983
- US-A- 1 382 799
- US-A1- 2010 326 006

## Description

On connaît de longue date les rondelles d'appui métalliques ou en matière de synthèse, présentant en leur centre un trou destiné à laisser passer le fût d'un élément de liaison comportant une tête, par exemple une vis ou un rivet, tout en retenant la tête dudit élément de liaison, la dimension du trou étant égale ou supérieure à celle du fût et inférieure à celle de la tête. Ces rondelles connues peuvent comporter une cuvette autour du trou central en vue de loger la tête de l'élément de liaison.

Ces rondelles augmentent la surface sur laquelle s'appuie la vis, en empêchant, de ce fait, que la tête de vis endommage le matériau placé sous elle dans le cas où l'on n'utilise pas de rondelle d'appui, en répartissant sur une plus grande surface la force exercée par la vis.

La présente invention a pour but d'améliorer ces rondelles d'appui qui, telles qu'elles ont été réalisées jusqu'à présent, présentent des inconvénients lors de leur utilisation.

Ces inconvénients ne se produisent que rarement dans le cas où le matériau placé sous la rondelle est un métal, mais se produisent davantage dans le cas où ce matériau est un bois, une matière de synthèse, ou un élastomère. En effet le bord circonférentiel des rondelles d'appui connues est une surface perpendiculaire au plan général des rondelles connues, l'arête inférieure du bord circonférentiel des rondelles connues, formée par la rencontre entre ladite surface perpendiculaire au plan général desdites rondelles connues et la surface plane inférieure desdites rondelles connues, exerce une action de cisaillement dans le matériau sur lequel s'appliquent les rondelles connues. Ce cisaillement est peu marqué ou même inexistant, dans le cas où ce matériau est un matériau dur, par exemple un matériau métallique, mais il se produit dès le serrage de la vis dans le cas où ce matériau est une matière de synthèse, et plus encore dans le cas où ce matériau est un élastomère. Comme dit plus haut, ce cisaillement peut se produire dès le serrage de la vis ou dès l'application du rivet, mais encore plus lorsque l'ensemble assemblé au moyen de l'élément de liaison, utilisant lesdites rondelles d'appui connues, est soumis à des forces s'exerçant dans des directions variées. Un exemple en est donné dans le domaine des jonctions en élastomère comme utilisées pour réunir les extrémités d'une bande transporteuse. Ces jonctions en élastomère armé sont fixées aux extrémités de la bande transporteuse à l'aide de vis ou de rivets qui traversent successivement la plaque supérieure de ces jonctions, les extrémités de la bande transporteuse et la plaque inférieure de ces jonctions.

Le brevet français n° 2 803 836 illustre cette application. On remarquera que dans le cas de ce brevet on utilise des inserts noyés dans la matière élastomère des plaques de la jonction pour recevoir des têtes de vis. Mais, lors de la fabrication, la mise en place, en particulier celle de l'insert supérieur formant cuvette en vue de recevoir la tête de vis, est coûteuse, et l'inventeur de la présente invention a essayé d'avoir recours à une rondelle d'appui en remplacement de l'insert supérieur. Mais il a rencontré les inconvénients, déjà décrits, avec les rondelles d'appui connues. D'où est née l'utilité de réaliser des rondelles d'appui nouvelles, aptes à éliminer ces inconvénients.

Dans la même application à des jonctions en élastomère armé destinées à réunir les extrémités d'une bande transporteuse, ce cisaillement est encore plus accentué en raison de l'utilisation, dans le cas de certaines bandes transporteuses, de racleurs constitués de lames appliquées contre la surface de la bande transporteuse en mouvement, ces lames étant destinées à évacuer les débris du matériau transporté subsistant sur ladite surface de la bande transporteuse, par exemple du charbon ou des minerais. Ces lames rencontrent les rondelles d'appui et accentuent l'effet de cisaillement décrit plus haut, d'autant plus que ces lames sont souvent munies de bords en acier au tungstène, particulièrement agressifs.

Les rondelles d'appui selon la présente invention ont pour but d'éviter ces cisaillements. Elles se caractérisent par plusieurs particularités.

Le document US 2010/326006 A1 divulgue également une rondelle connue de l'art antérieur.

Selon un aspect technique, l'invention concerne une rondelle d'appui pour ensemble vissé ou riveté, notamment pour élément de jonction de bande transporteuse, constituée d'une pièce de métal ou de matière de synthèse de forme approximativement plane présentant en son centre un trou destiné au passage d'un élément de liaison du type rivet ou vis comportant un fût et une tête, de préférence une vis dotée d'un filetage mâle ou d'un filetage femelle, dont le tête, lors de l'utilisation de la rondelle, est en appui sur les bords du trou central de la rondelle, remarquable en ce que le ou les bord(s) extérieur(s) de la pièce constituant la rondelle présentent, vu en plan, une forme linéaire qui augmente la longueur du bord extérieur de la rondelle par rapport à celle d'une rondelle dont le bord extérieur est strictement circulaire.

Cette particularité consiste dans le fait que les bords extérieurs des rondelles d'appui ne sont pas circulaires mais présentent, vu en plan, des formes linéaires qui augmentent sensiblement la longueur du bord extérieur, ou de l'arête inférieure, de la rondelle par rapport à une forme linéaire strictement circulaire comme celle du bord d'une rondelle d'appui connue.

Cette augmentation de longueur a pour effet de réduire l'impact de cisaillement exercé sur la matière placée sous la rondelle, par exemple celle d'une jonction pour bande transporteuse.

Il faut cependant noter que la rondelle nouvelle revendiquée par la présente invention peut être appliquée dans d'autre cas que dans celui des jonctions pour bandes transporteuses lorsque, du fait de son utilisation, la rondelle peut mordre dans le matériau sous-jacent, sous l'effet de basculements, de vibrations, ou d'une force de serrage trop importante.

On notera que les bords du trou central de la rondelle peuvent être chanfreinés, ou déformés, afin que la surface supérieure de la tête affleure, en fin de vissage ou de rivetage, la surface supérieure de la rondelle voisine du trou central.

Une autre particularité technique de la présente invention est que le bord extérieur présente, vu en plan, des sinuosités comportant des ventres et des creux, les ventres étant plus éloignés du centre géométrique de la rondelle et les creux étant plus proches du centre géométrique de la rondelle.

Une autre particularité des rondelles selon la présente invention est que les zones du bord de la rondelle qui sont le plus éloignées du centre géométrique de la rondelle comportent un arrondi sur l'arête inférieure. En d'autres termes, selon cette caractéristique, la rondelle d'appui comprend une arête inférieure, formée par la rencontre entre la surface inférieure de la rondelle et le bord extérieur de la rondelle, ladite arête inférieure présentant un arrondi, au moins dans les parties ventres des sinuosités du bord extérieur de la rondelle situées le plus loin du centre géométrique de la rondelle.

Ces parties arrondies permettent, lors de l'utilisation de la rondelle, de réduire encore l'effet de cisaillement éventuel. Même si des essais ont montré que cet arrondi est surtout utile en ce qui concerne les parties de l'arête inférieure les plus éloignées du centre géométrique de la rondelle, il est également possible que la totalité de l'arête inférieure du bord de la rondelle soit dotée d'un tel arrondi.

Enfin les rondelles selon la présente invention peuvent présenter une autre particularité qui est utile en ce qui concerne l'application aux jonctions en élastomère armé utilisées pour réunir les deux extrémités d'une bande transporteuse.

En effet, les installations utilisant des bandes transporteuses destinées au transport de matériaux en vrac, telles que du charbon, des minerais et d'autres matériaux, comportent généralement des racleurs. Ces racleurs ont tendance à s'accrocher sur l'arête supérieure du bord extérieur de la rondelle et à arracher la rondelle en entraînant la vis ou le rivet. Un tel incident a pour conséquence l'obligation d'effectuer une réparation, ce qui implique donc également des pertes de temps d'exploitation considérables.

C'est pourquoi la présente invention prévoit de doter la surface supérieure des rondelles selon la présente invention d'une conicité partant du bord extérieur de la cuvette qui entoure le trou central et aboutit au bord extérieur de la rondelle, cette conicité entraînant un amincissement progressif de la rondelle depuis la zone centrale jusqu'au bord extérieur de la rondelle. En d'autres termes, selon cette caractéristique, la surface supérieure de la rondelle présente une surface conique partant sensiblement du bord de la cuvette entourant le trou central ou d'une surface circulaire entourant le trou central de la rondelle et aboutissant au bord extérieur de la rondelle, cette surface conique entraînant un amincissement progressif de la rondelle tel que l'arête supérieure du bord extérieur de la rondelle affleure sensiblement la surface sur laquelle est placée la rondelle lorsque la rondelle a été appliquée par rivetage ou par vissage.

Ainsi les racleurs ne risquent pas de rencontrer l'arête supérieure du bord extérieur de la rondelle, cette arête étant en affleurement avec la surface de la jonction sous-jacente, une fois la rondelle installée.

L'invention est illustrée par le dessin, dans lequel :
- la figure 1 représente une rondelle d'appui selon l'art antérieur,
- la figure 2 représente une forme de réalisation préférée de la rondelle selon la présente invention,
- la figure 3 représente la rondelle de la figure 2 comportant une vis dont le fût traverse le trou central,
- la figure 4 représente la rondelle selon la figure 3, appliquée à une vis dont le fût traverse le trou central, qui est vissée sur un insert,
- la figure 5 représente un exemple de liaison par vis, selon l'art antérieur, tiré de la figure 3 du brevet français 2 803 836,
- la figure 6 représente, en coupe, une liaison par vis utilisant une rondelle selon la présente invention, appliquée à une jonction reliant les extrémités d'une bande transporteuse,
- la figure 7 montre à gauche une rondelle connue et à droite une rondelle selon la présente invention, appliquées sur une plaque supérieure de jonction de bande transporteuse.

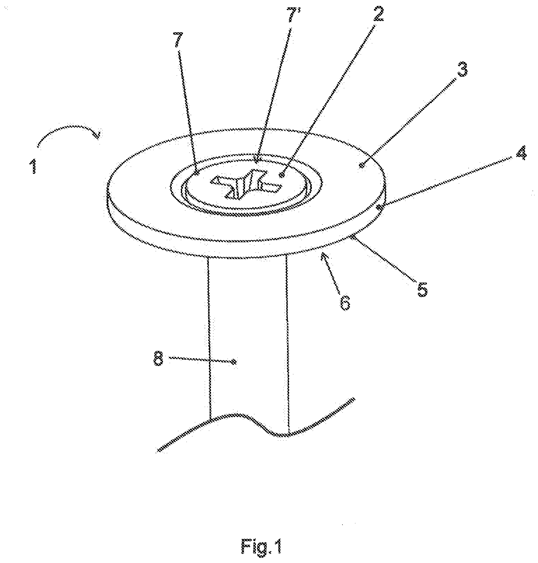

La rondelle d'appui 1 de la figure 1 selon l'art antérieur, consiste en une pièce de forme ronde, comportant un bord circonférentiel 4, une arête inférieure 5, une surface plane inférieure 6, un trou central 7' dont les bords forment une cuvette 7 destinée à recevoir une tête de vis 2, le fût 8 de la vis passant dans le trou central 7'.

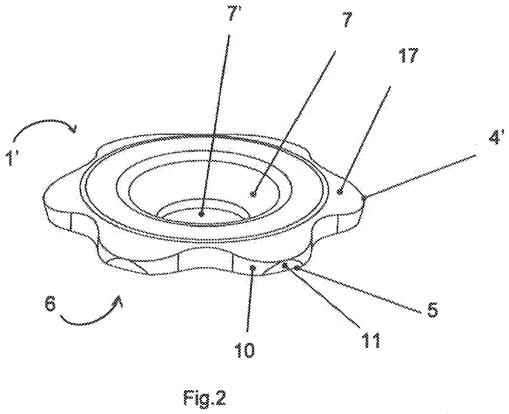

La rondelle d'appui 1' de la figure 2, selon une forme de réalisation préférée selon la présente invention, comporte, comme la rondelle d'appui 1 de l'art antérieur, une pièce de forme générale ronde comportant un bord extérieur 4', un trou central 7', une cuvette 7, une arête inférieure 5, une surface inférieure 6 ; cependant, on remarque que le bord extérieur 4' a, vu en plan, une forme sinusoïdale présentant des ventres 10 et des creux 9, que la surface supérieure 17 est conique et que les ventres comportent à leur extrémité un arrondi 11, cet arrondi étant réalisé sur l'arête inférieure 5.

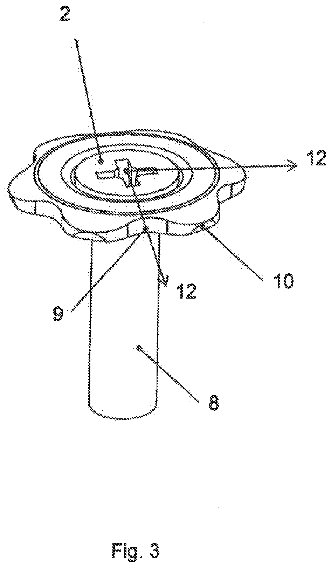

L'ensemble représenté sur la figure 3 est constitué d'une rondelle 1' et d'une vis.

On remarque la tête de vis 2, le fût de vis 8, les creux 9 et les ventres 10. Le nombre de creux et de ventres est ici de 6, mais ce nombre peut varier sans sortir du champ de l'invention. Les creux et les ventres sont symétriques par rapport à un rayon virtuel 12 de la rondelle. Cela signifie que la rondelle présente une symétrie par rapport à un axe porté par son rayon virtuel 12.

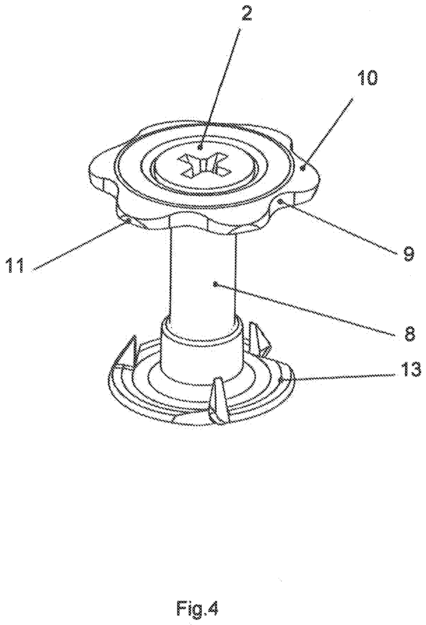

La figure 4 représente le même ensemble que celui de la figure 3, avec les mêmes références numériques, le fût de vis 8 étant vissé sur un insert 13.

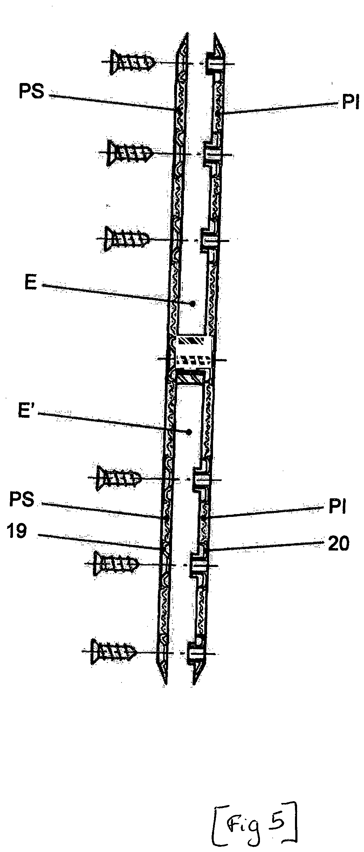

La figure 5 représente en coupe un exemple d'un ensemble vissé de la plaque supérieure et de la plaque inférieure d'une jonction pour bande transporteuse de l'art antérieur, selon le brevet français 2 803 836. On remarque les inserts femelles 19 et les inserts mâles 20 incorporés respectivement dans la plaque supérieure PS et dans la plaque inférieure Pl, ces plaques enserrant l'extrémité E, de la bande transporteuse.

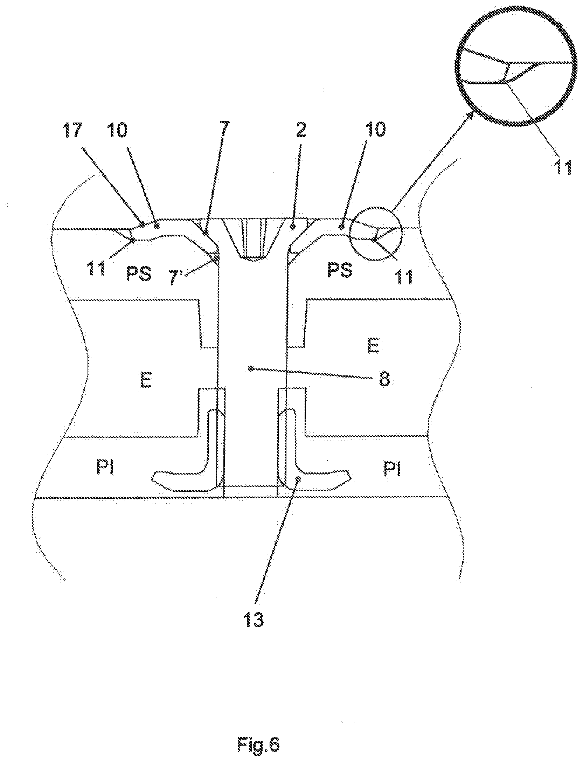

La figure 6 est une coupe selon un plan vertical d'un exemple d'utilisation de rondelle selon la présente invention, appliquée à un ensemble vissé constitué de la plaque supérieure PS de jonction pour bande transporteuse, de l'extrémité E de bande transporteuse et de la plaque inférieure PI de jonction pour bande transporteuse.

Sur cette coupe on remarque particulièrement la surface conique 17 de la rondelle représentée par une ligne inclinée par rapport au plan général de la rondelle, la tête de vis 2, la cuvette 7 et le trou central 7', l'arrondi 11, le fût de vis 8, la plaque supérieure PS de la jonction, l'extrémité E, de la bande transporteuse, l'insert 13, la plaque inférieure PI de la jonction. L'agrandissement de la zone comportant l'arrondi 11 entourée d'un cercle sur la figure, permet de mieux observer ledit arrondi 11.

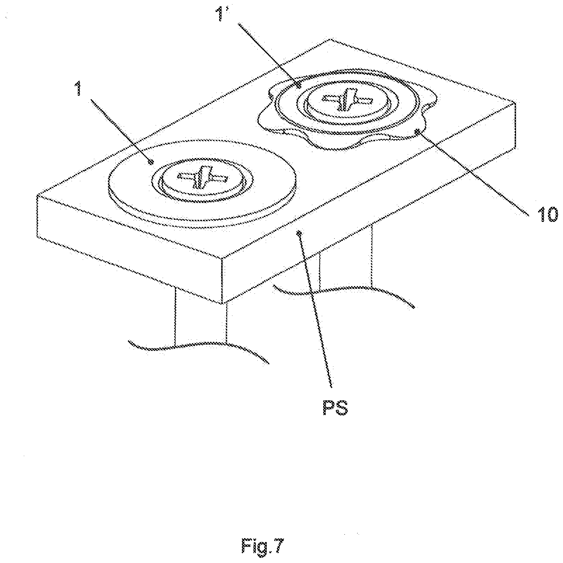

On remarque sur la figure 7 que l'extrémité des ventres 10 affleure la surface de la plaque supérieure PS de la jonction pour bande transporteuse. L'arrondi 11 (non visible sur cette figure) de l'arête inférieure du ventre 10 a permis de ne pas cisailler la matière de la plaque supérieure PS lors du vissage malgré le léger enfoncement qui se produit en fin de vissage. Ainsi les racleurs évoqués plus haut ne risquent pas de rencontrer l'arête supérieure du ventre et d'arracher la rondelle et, de ce fait, la vis. Au contraire, la rondelle connue dépasse de la surface supérieure de la plaque supérieure PS, et si on visse plus fortement pour enfoncer la rondelle l'absence d'arrondi sur la périphérie provoque un cisaillement de la matière sous-jacente dés le vissage et ensuite l'accentue, lors du fonctionnement de la bande transporteuse.

La rondelle selon la présente invention atteint ainsi tous les buts recherchés initialement, à savoir éviter l'effet de cisaillement et ne pas donner prise à des racleurs. Les moyens utilisés pour atteindre ces buts sont décrits et illustrés. Les revendications qui suivent exposent les caractéristiques des nouvelles rondelles.

## Revendications

1. Rondelle d'appui (1') pour ensemble vissé ou riveté pour élément de jonction de bande transporteuse, constituée d'une pièce de métal ou de matière de synthèse de forme approximativement plane présentant en son centre un trou (7') destiné au passage d'un élément de liaison du type rivet ou vis comportant un fût (8) et une tête (2), de préférence une vis dotée d'un filetage mâle ou d'un filetage femelle, dont le tête (2), lors de l'utilisation de la rondelle (1'), est en appui sur les bords du trou central (7') de la rondelle (1'), le bord extérieur (4') de la pièce constituant la rondelle (1') présentant, vu en plan, des sinuosités comportant des ventres (10) et des creux (9), les ventres (10) étant plus éloignés du centre géométrique de la rondelle et les creux (9) étant plus proches du centre géométrique de la rondelle, de sorte que ce bord extérieur (4') présente une forme linéaire qui augmente la longueur du bord extérieur (4') de la rondelle (1') par rapport à celle d'une rondelle dont le bord extérieur est strictement circulaire,
- la rondelle d'appui comprenant une arête inférieure (5), formée par la rencontre entre la surface inférieure (6) de la rondelle et le bord extérieur (4') de la rondelle, ladite arête inférieure (5) présentant un arrondi (11), au moins dans les parties ventres (10) des sinuosités du bord extérieur (4') de la rondelle situées le plus loin du centre géométrique de la rondelle, **caractérisée en ce que**
- la surface supérieure de la rondelle (1') présente une surface conique (17) partant du bord d'une cuvette (7) entourant le trou central (7') ou d'une surface circulaire entourant le trou central (7') de la rondelle (1') et aboutissant au bord extérieur de la rondelle, cette surface conique entraînant un amincissement progressif de la rondelle (1') tel que l'arête supérieure du bord extérieur (4') de la rondelle (1') affleure la surface sur laquelle est placée la rondelle (1') lorsque la rondelle (1') a été appliquée par rivetage ou par vissage.

2. Rondelle d'appui selon la revendication 1 **caractérisée en ce que** les ventres (10) et les creux (9) des sinuosités du bord extérieur (4') de la rondelle (1') ont une forme approximativement symétrique par rapport à un rayon virtuel (12) partant du centre géométrique de la rondelle.

## Patentansprüche

1. Unterlegscheibe (1') für eine geschraubte oder genietete Einheit für ein Anschlusselement eines Förderbandes, bestehend aus einem Stück Metall oder synthetischem Material von annähernd ebener Form, das in seiner Mitte ein Loch (7') aufweist, das für den Durchgang eines Verbindungselements von dem Typ Niet oder Schraube, enthaltend einen Schaft (8) und einen Kopf (2), bestimmt ist, vorzugsweise eine Schraube, versehen mit einem Außengewinde oder einem Innengewinde, deren Kopf (2) bei Verwendung der Scheibe (1') auf den Rändern des mittigen Lochs (7') der Scheibe (1') aufliegt, wobei der Außenrand (4') des Stücks, aus dem die Scheibe (1') besteht, in Draufsicht gesehen, Windungen aufweist, die Ausbuchtungen (10) und Vertiefungen (9) enthalten, wobei die Ausbuchtungen (10) weiter von der geometrischen Mitte der Scheibe entfernt sind und die Vertiefungen (9) näher an der geometrischen Mitte der Scheibe sind, so dass dieser Außenrand (4') eine lineare Form aufweist, die die Länge des Außenrands (4') der Scheibe (1') in Bezug auf eine Scheibe, deren Außenrand streng kreisförmig ist, vergrößert,
- wobei die Unterlegscheibe eine untere Kante (5) umfasst, die durch das Zusammentreffen der unteren Oberfläche (6) der Scheibe und des Außenrands (4') der Scheibe gebildet wird, wobei die untere Kante (5) mindestens in den ausgebuchteten Abschnitten (10) der Windungen des Außenrands (4') der Scheibe, die am weitesten von der geometrischen Mitte der Scheibe entfernt sind, eine Abrundung (11) aufweist, **dadurch gekennzeichnet, dass**
- die obere Oberfläche der Scheibe (1') eine konische Oberfläche (17) aufweist, die von dem Rand einer das mittige Loch (7') umgebenden Mulde (7) oder einer das mittige Loch (7') der Scheibe (1') umgebenden kreisförmigen Oberfläche ausgeht und an dem Außenrand der Scheibe endet, wobei diese konische Oberfläche zu einer allmählichen Verdünnung der Scheibe (1') führt, so dass die obere Kante des Außenrands (4') der Scheibe (1') mit der Oberfläche bündig ist, auf der die Scheibe (1') platziert ist, wenn die Scheibe (1') durch Vernieten oder Verschrauben angebracht wurde.

2. Unterlegscheibe nach Anspruch 1, **dadurch gekennzeichnet, dass** die Ausbuchtungen (10) und Vertiefungen (9) der Windungen des Außenrands (4') der Scheibe (1') eine annähernd symmetrische Form in Bezug auf einen virtuellen Radius (12) haben, der von der geometrischen Mitte der Scheibe ausgeht.

## Claims

1. Bearing washer (1') for a screwed or riveted assembly for a joining element of a conveyor belt, consisting of a piece of metal or synthetic material of approximately planar shape having, at its center, a hole (7') intended for the passage of a connecting element of the rivet or screw type comprising a barrel (8) and a head (2), preferably a screw with a male thread or a female thread, the head (2) of which screw, during use of the washer (1'), bears against the edges of the central hole (7') of the washer (1'), the outer edge (4') of the part constituting the washer (1') having, seen in plan view, sinuosities comprising elevations (10) and depressions (9), the elevations (10) being farther from the geometric center of the washer, and the depressions (9) being closer to the geometric center of the washer, such that this outer edge (4') has a linear shape that increases the length of the outer edge (4') of the washer (1') relative to that of a washer of which the outer edge is strictly circular,
- the bearing washer comprising a lower edge (5), formed by the intersection between the lower surface (6) of the washer and the outer edge (4') of the washer, said lower edge (5) having a rounded portion (11), at least in the elevation portions (10) of the sinuosities of the outer edge (4') of the washer located furthest from the geometric center of the washer, **characterized in that**
- the upper surface of the washer (1') has a conical surface (17) starting from the edge of a bowl (7) surrounding the central hole (7') or a circular surface surrounding the central hole (7') of the washer (1') and ending in the outer edge of the washer, this conical surface resulting in gradual tapering of the washer (1') such that the upper edge of the outer edge (4') of the washer (1') is flush with the surface on which the washer (1') is placed when the washer (1') has been applied by riveting or by screwing.

2. Bearing washer according to claim 1, **characterized in that** the elevations (10) and the depressions (9) of the sinuosities of the outer edge (4') of the washer (1') have an approximately symmetrical shape with respect to a virtual radius (12) starting from the geometric center of the washer.
